# EUROPEAN PATENT SPECIFICATION

(11) **EP 2 535 538 B1**
(45) Date of publication and mention of the grant of the patent: **11.11.2015**
(21) Application number: 10845219.4
(22) Date of filing: 08.02.2010
(51) Int. Cl.: F01N 3/36, F01N 3/02, F01N 3/08, F01N 3/20, F01N 9/00

(54) **EXHAUST GAS PURIFICATION SYSTEM FOR INTERNAL COMBUSTION ENGINE**
ABGASREINIGUNGSSYSTEM FÜR EINEN VERBRENNUNGSMOTOR
SYSTÈME DE PURIFICATION DES GAZ D'ÉCHAPPEMENT POUR UN MOTEUR À COMBUSTION INTERNE

(43) Date of publication of application: 19.12.2012
(73) Proprietor: TOYOTA JIDOSHA KABUSHIKI KAISHA, Toyota-shi, Aichi-ken, 471-8571 (JP)
(72) Inventor: TAKAHASHI, Noriyoshi, Kariya-shi Aichi 448-8671 (JP); ITOH, Kazuhiro, Toyota-shi, Aichi-ken, 471-8571 (JP)
(74) Representative: Smith, Samuel Leonard
(86) International application number: PCT/JP2010/051824
(87) International publication number: WO 2011/096086

(56) References cited:
- EP-A1- 2 034 147
- EP-A2- 1 331 373
- WO-A1-2008/080692
- DE-A1-102007 000 538
- JP-A- 2008 101 564
- JP-A- 2010 007 617
- JP-A- 2010 024 896

## Description

### [TECHNICAL FIELD]

The present invention relates to an exhaust gas purification system for an internal combustion engine provided with an addition valve for adding an oxidizing agent or a reducing agent into an exhaust gas.

### [BACKGROUND ART]

An exhaust gas purification system for an internal combustion engine has been hitherto known, which is provided with an addition valve for adding, into an exhaust gas, an oxidizing agent or a reducing agent to be supplied to an exhaust gas purification catalyst. Patent Document 1 discloses an exhaust gas purification apparatus which is provided with an aqueous urea solution addition valve for adding an aqueous urea solution (urea-water solution) into an exhaust tube in order to supply urea to an NOx selective reduction catalyst.

Patent Document 1 discloses such a technique that the aqueous urea solution, which remains in the urea addition valve, is sucked back by reversely driving and rotating a pump which is provided to feed the aqueous urea solution under pressure to the urea addition valve, after the stop of the operation of the internal combustion engine. According to this technique, it is possible to suppress the breakage of the urea addition valve which would be otherwise caused such that the aqueous urea solution, which remains in the urea addition valve, is frozen after the stop of the operation of the internal combustion engine, and the volume thereof is expanded.

### [PRIOR ART DOCUMENTS]

### [Patent Documents]

Patent Document 1: Japanese patent application laid-open No.2008-101564 and equivalent DE 10 2007 000 538 A1.

### [SUMMARY OF THE INVENTION]

### [Problem to be Solved by the Invention]

The fuel is added as an oxidizing agent or a reducing agent from an addition valve in some cases. In such a situation, if the fuel remains in the fuel addition valve after the stop of the operation of the internal combustion engine as well, it is feared that the fuel may accelerate the deterioration of the addition valve, and/or the fuel may cause any defective addition when the fuel addition is executed after the restart of the internal combustion engine. When the fuel is sucked back from the inside of the fuel addition valve after the stop of the operation of the internal combustion engine, it is possible to suppress the occurrence of the inconvenience or malfunction as described above.

However, when the suck back or retraction of the oxidizing agent or the reducing agent from the inside of the addition valve (hereinafter referred to as "suck back control") as described above is executed, any foreign matter (for example, thermally modified matter of oxidizing agent or reducing agent as well as oxide and particulate matter contained in exhaust gas), which exists in the vicinity of the injection port (injection hole) of the addition valve for injecting the oxidizing agent or the reducing agent, is sucked from the injection port into the addition valve. If the foreign matter is sucked into the addition valve, it is feared that any interposition of the foreign matter or any clog-up by the foreign matter may be caused in the addition valve ("interposition of foreign matter or clog-up by foreign matter" is hereinafter referred to as "foreign matter malfunction" in some cases).

The foreign matter malfunction in the addition valve is sometimes caused during the operation of the internal combustion engine as well. If the suck back control is executed in a state in which the foreign matter malfunction is caused in the addition valve from the beginning, it is feared that the foreign matter malfunction may be deteriorated.

When the foreign matter malfunction is caused or the foreign matter malfunction is deteriorated in the addition valve, it is feared that it may be difficult to appropriately control the amount of addition when the oxidizing agent or the reducing agent is added into the exhaust gas in order to supply the oxidizing agent or the reducing agent to the exhaust gas purification catalyst after the restart of the internal combustion engine.

The present invention has been made taking the foregoing problem into consideration, an object of which is to provide a technique which makes it possible to suppress the occurrence or the deterioration of the foreign matter malfunction in an addition valve, caused by the suck back of an oxidizing agent or a reducing agent from the inside of the addition valve in an exhaust gas purification system for an internal combustion engine provided with the addition valve for adding the oxidizing agent or the reducing agent into an exhaust gas.

### [Means for Solving the Problem]

In the present invention, the addition of an oxidizing agent or a reducing agent is executed in order to blow off any foreign matter existing in an addition valve or in the vicinity of an injection port of the addition valve at a predetermined timing before the execution of the suck back control.

In particular, the present invention provides an exhaust gas purification system for an internal combustion engine as defined in appended claim 1.

According to the present invention, the foreign matter, which exists in the addition valve or in the vicinity of the injection port of the addition valve, can be blown off by adding the oxidizing agent or the reducing agent from the addition valve before executing the suck back control. Therefore, the suction or intake of the foreign matter can be suppressed when the suck back control is executed. As a result, it is possible to suppress the occurrence or the deterioration of the foreign matter malfunction in the addition valve.

The predetermined timing may be provided either before the stop or after the stop of the operation of the internal combustion engine. When the predetermined timing is the timing before the stop of the operation of the internal combustion engine, it is also allowable that the predetermined timing is provided immediately before the stop of the operation of the internal combustion engine, the predetermined timing being set to such a timing that the amount of the foreign matter in the exhaust gas, which is newly adhered to the vicinity of the injection port of the addition valve during the period until the operation of the internal combustion engine is stopped after the stop of the execution of the pre-suck back addition control, is suppressed to be within an allowable range. On the other hand, when the predetermined timing is the timing after the stop of the operation of the internal combustion engine, it is also allowable that the predetermined timing is provided immediately after the stop of the operation of the internal combustion engine, the predetermined timing being set to such a timing that the exhaust gas purification catalyst is still in the active state, and the oxidizing agent or the reducing agent, which is added in accordance with the pre-suck back addition control, is consumed in the oxidation reaction or the reduction reaction on the exhaust gas purification catalyst.

In the present invention, the exhaust gas purification catalyst may be an NOx selective reduction catalyst, and the addition valve may add a compound originating from ammonia as the reducing agent. In this case, even when the pre-suck back addition control is executed after the stop of the operation of the internal combustion engine, the added compound originating from ammonia adsorbs to the NOx selective reduction catalyst. The adsorbed compound originating from ammonia is consumed as the reducing agent after the restart of the internal combustion engine. Therefore, in this case, the predetermined timing may be the timing after the stop of the operation of the internal combustion engine.

In the present invention, the addition valve may add a fuel as the reducing agent. In this case, when the pre-suck back addition control is executed after the stop of the operation of the internal combustion engine, the added fuel tends to adhere to the exhaust gas passage or the exhaust gas purification catalyst. Therefore, in this case, the predetermined timing may be the timing before the stop of the operation of the internal combustion engine.

In the present invention, the pre-suck back addition control may be executed once by the pre-suck back addition control executing means every time when the suck back control is executed a predetermined number of times by the suck back control executing means. The predetermined number of times is herein two or more times, which is a number of times previously determined. Accordingly, it is possible to suppress the consumption of the oxidizing agent or the reducing agent as compared with a case in which the pre-suck back addition control is executed every time when the suck back control is executed.

The exhaust gas purification system for the internal combustion engine according to the present invention may further comprise judging means which judges whether or not interposition of any foreign matter or clog-up of an injection port by any foreign matter arises in the addition valve. In this case, the pre-suck back addition control may be executed by the pre-suck back addition control executing means if the affirmative judgment is given by the judging means. Accordingly, it is possible to suppress the consumption of the oxidizing agent or the reducing agent while suppressing the deterioration of the foreign matter malfunction.

In the exhaust gas purification system for the internal combustion engine according to the present invention, the oxidizing agent or the reducing agent may be injected periodically a plurality of times when the oxidizing agent or the reducing agent is added into the exhaust gas from the addition valve. In this case, an injection period of the oxidizing agent or the reducing agent, which is provided when the pre-suck back addition control is executed, may be shorter than that provided when the oxidizing agent or the reducing agent is added from the addition valve in order to supply the oxidizing agent or the reducing agent to the exhaust gas purification catalyst (hereinafter referred to as "upon (during) the ordinary addition" or "when the ordinary addition is performed (executed)" in some cases). Further, in the present invention, an injection pressure of the oxidizing agent or the reducing agent, which is provided when the pre-suck back addition control is executed, may be higher than that provided upon (during) the ordinary addition. Accordingly, the foreign matter, which exists in the addition valve or in the vicinity of the injection port of the addition valve, can be blown off more effectively by means of the pre-suck back addition control.

In the exhaust gas purification system for the internal combustion engine according to the present invention, when the exhaust gas purification catalyst is an NOx selective reduction catalyst, and the addition valve adds a compound originating from ammonia as the reducing agent, then the system may further comprise adsorption amount acquiring means which acquires an adsorption amount of the compound originating from ammonia in the s NOx selective reduction catalyst.

In this case, an amount of addition of the compound originating from ammonia, which is added from the addition valve when the pre-suck back addition control is executed, may be set on the basis of the adsorption amount of the compound originating from ammonia acquired by the adsorption amount acquiring means. That is, the amount of addition of the compound originating from ammonia, which is added from the addition valve when the pre-suck back addition control is executed, may be set so that the adsorption amount of the compound originating from ammonia in the NOx selective reduction catalyst does not exceed an upper limit value of an adsorbable amount. Accordingly, the compound originating from ammonia, which is added from the addition valve, can be suppressed from passing to the downstream side from the NOx selective reduction catalyst, when the pre-suck back addition control is executed.

In the present invention, the supply section may include a storage tank, a supply passage, and a pump. The storage tank is a tank which stores the oxidizing agent or the reducing agent. The supply passage is a passage which connects the storage tank and the addition valve. The pump is provided for the supply passage, and the pump feeds, under pressure, the oxidizing agent or the reducing agent from a side of the storage tank to a side of the addition valve. In this case, the suck back control can be executed by reversely driving the pump by the suck back control executing means.

In the present invention, the supply section may include a storage tank, a supply passage, a pump, a first return passage, a second return passage, and a three-way valve. The first return passage is a passage which connects the pump and the storage tank and which allows the oxidizing agent or the reducing agent to flow from a side of the pump to a side of the storage tank by means of a pressurized feeding force of the pump. The second return passage is a passage which connects a portion of the supply passage disposed on a downstream side from the pump and the pump or the first return passage. The three-way valve is provided at a connecting portion between the supply passage and the second return passage. In this case, the suck back control executing means can execute the suck back control by opening a route between the second return passage and a portion of the supply passage disposed on a downstream side from the three-way valve by means of the three-way valve.

### [Advantageous Effect of the Invention]

According to the present invention, the occurrence or the deterioration of the foreign matter malfunction in the addition valve, which would be otherwise caused by the suck back of the oxidizing agent or the reducing agent from the inside of the addition valve, can be suppressed in the exhaust gas purification system for the internal combustion engine provided with the addition valve for adding the oxidizing agent or the reducing agent into the exhaust gas.

### [BRIEF DESCRIPTION OF THE DRAWINGS]

[FIG. 1] Fig. 1 shows a schematic arrangement of an intake/exhaust system of an internal combustion engine according to a first embodiment.
[FIG. 2] Fig. 2 shows a schematic arrangement of a urea addition valve according to the first embodiment.
[FIG. 3] Fig. 3 shows a flow chart illustrating a flow of the pre-suck back addition control and the suck back control according to the first embodiment.
[FIG. 4] Fig. 4 shows a flow chart illustrating a flow of the pre-suck back addition control and the suck back control according to a second embodiment.
[FIG. 5] Fig. 5 shows a flow chart illustrating a flow of the pre-suck back addition control and the suck back control according to a third embodiment.
[FIG. 6] Fig. 6 shows a flow chart illustrating a flow of the pre-suck back addition control and the suck back control according to a fourth embodiment.
[FIG. 7] Fig. 7 shows a schematic arrangement of an intake/exhaust system of an internal combustion engine according to a modified embodiment of the fourth embodiment.

### [EMBODIMENTS FOR CARRYING OUT THE INVENTION]

Specified embodiments of the present invention will be explained below on the basis of the drawings. For example, sizes (dimensions), materials, and shapes of constitutive parts or components as well as relative arrangements thereof, which are described in the embodiments of the present invention, are not intended to limit the technical scope of the invention only thereto, unless otherwise specified.

### <First Embodiment>

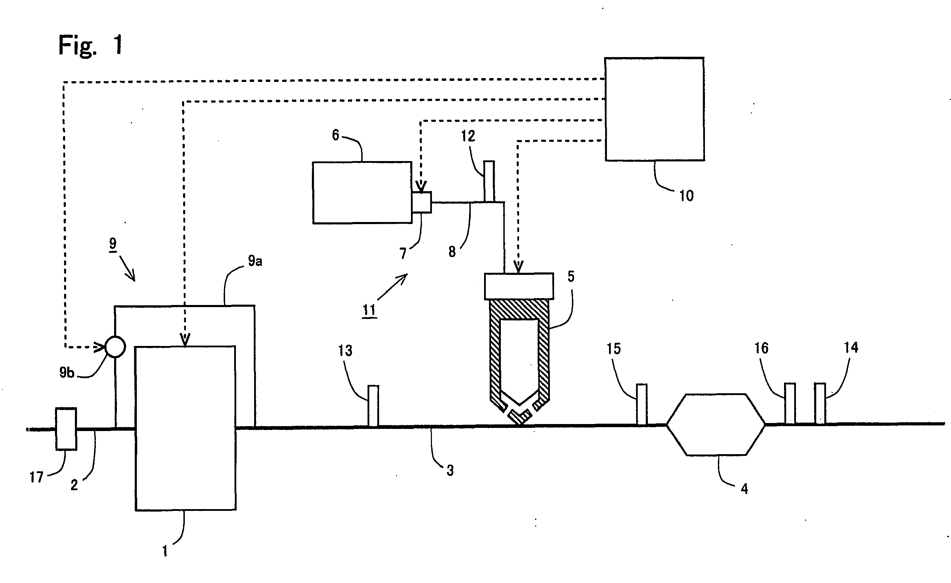

A first embodiment of the present invention will be explained on the basis of Figs. 1 to 3. This embodiment will be explained as exemplified by a case in which the present invention is applied to a diesel engine for driving a vehicle by way of example. However, the internal combustion engine according to the present invention is not limited to the diesel engine.

### (Schematic arrangement of intake/exhaust system of internal combustion engine)

Fig. 1 shows a schematic arrangement of an intake/exhaust system of an internal combustion engine according to this embodiment. The internal combustion engine 1 is the diesel engine for driving the vehicle. An intake passage 2 and an exhaust gas passage 3 are connected to the internal combustion engine 1. An air flow meter 17 is provided for the intake passage 2. An NOx selective reduction catalyst (hereinafter referred to as "SCR") 4 is provided as the exhaust gas purification catalyst in the exhaust gas passage 3.

The exhaust system of the internal combustion engine 1 is provided with a urea supply apparatus 11 for supplying urea to serve as the reducing agent to SCR 4. The urea supply apparatus 11 is provided with a urea addition valve 5, a urea tank 6, an electric pump 7, a urea passage 8, and a pressure sensor 12. The urea addition valve 5 is provided for the exhaust gas passage 3 at a portion disposed on the upstream side from SCR 4. One end of the urea passage 8 is connected to the urea addition valve 5. The other end of the urea passage 8 is connected to the urea tank 6. The electric pump 7 and the pressure sensor 12 are provided for the urea passage 8. An aqueous urea solution is stored in the urea tank 6. The aqueous urea solution, which is stored in the urea tank 6, is fed under pressure via the urea passage 8 to the urea addition valve 5 by means of the electric pump 7.

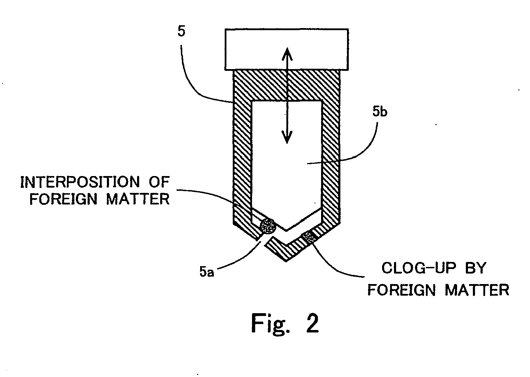

Fig. 2 shows a schematic arrangement of the urea addition valve 5. A plurality of injection ports (injection holes) 5a are formed at the forward end portion of the urea addition valve 5. A needle 5b is provided at the inside of the urea addition valve 5. When the needle 5b is moved in the axial direction of the urea addition valve 5 (in the direction indicated by the arrows in Fig. 2), the injection ports 5a are opened or shut off (closed). When the injection ports 5a are opened, the aqueous urea solution is injected from the injection ports 5a.

In this embodiment, when the aqueous urea solution is added from the urea addition valve 5, then the injection ports 5a are repeatedly opened and shut off, and thus the aqueous urea solution is periodically injected a plurality of times. When the pressurized feeding pressure of the aqueous urea solution, which is applied by the electric pump 7, is changed, it is possible to change the injection pressure of the aqueous urea solution injected from the urea addition valve 5.

The urea is supplied to SCR 4 by adding the aqueous urea solution from the urea addition valve 5 into the exhaust gas. The urea, which is supplied to SCR 4, is once adsorbed to SCR 4. The adsorbed urea is hydrolyzed, and thus ammonia is produced. The ammonia behaves as the reducing agent, and NOx contained in the exhaust gas is reduced thereby.

An EGR apparatus 9, which introduces a part of the exhaust gas as EGR gas into the intake system, is provided for the intake/exhaust system of the internal combustion engine 1. The EGR apparatus 9 is provided with an EGR passage 9a and an EGR valve 9b. One end of the EGR passage 9a is connected to the exhaust gas passage 3 at a portion disposed on the upstream side from SCR 4. The other end of the EGR passage 9a is connected to the intake passage 2 at a portion disposed on the downstream side from the air flow meter 17. The EGR valve 9b is provided in the EGR passage 9a. The amount of the EGR gas, which is introduced via the EGR passage 9a from the exhaust gas passage 3 into the intake passage 2, is controlled by the EGR valve 9b.

An upstream side NOx sensor 13 is provided for the exhaust gas passage 3 on the upstream side from the urea addition valve 5. A downstream side NOx sensor 14 is provided for the exhaust gas passage 3 on the downstream side from SCR 4. Each of the NOx sensors 13, 14 detects the NOx concentration of the exhaust gas. An upstream side temperature sensor 15 is provided for the exhaust gas passage 3 on the downstream side from the urea addition valve 5 and on the upstream side from SCR 4. A downstream side temperature sensor 16 is provided for the exhaust gas passage 3 on the downstream side from SCR 4. Each of the temperature sensors 15, 16 detects the temperature of the exhaust gas.

An electronic control unit (ECU) 10 is provided in combination with the internal combustion engine 1 in order to control the internal combustion engine 1. The air flow meter 17, the pressure sensor 12, the NOx sensors 13, 14, and the temperature sensors 15, 16 are electrically connected to ECU 10. Output signals of these sensors are inputted into ECU 10. Further, a fuel injection valve (not shown) of the internal combustion engine 1, the urea addition valve 5, the electric pump 7, and the EGR valve 9b are electrically connected to ECU 10. The apparatuses or devices as described above are controlled by ECU 10.

In this embodiment, SCR 4 corresponds to the exhaust gas purification catalyst according to the present invention, and the urea addition valve 5 corresponds to the addition valve according to the present invention. In this embodiment, the urea supply apparatus 11 corresponds to the supply section according to the present invention.

### (Suck back control)

If the aqueous urea solution remains in the urea passage 8 or the urea addition valve 5 after the stop of the operation of the internal combustion engine 1, the aqueous urea solution is frozen in some cases. If the aqueous urea solution is frozen in the urea passage 8 or the urea addition valve 5, it is feared that the urea passage 8 or the urea addition valve 5 may be broken due to the increase in the volume thereof. Further, it becomes necessary to heat the urea passage 8 or the urea addition valve 5 in order to dissolve the frozen aqueous urea solution when the operation of the internal combustion engine 1 is restarted. Furthermore, even when the aqueous urea solution is not frozen, if the aqueous urea solution remains in the urea addition valve 5, then it is feared that the deterioration of the urea addition valve 5, which is caused by urea, may be accelerated.

In view of the above, in this embodiment, the suck back control is executed such that the aqueous urea solution, which stays in the urea passage 8 and the urea addition valve 5, is sucked back into the urea tank 6 by driving the electric pump 7 in the opposite or reverse direction after the stop of the operation of the internal combustion engine 1. It is possible to suppress the aqueous urea solution from remaining in the urea addition valve 5 by executing the suck back control.

### (Pre-suck back addition control)

In this procedure, if the suck back control is executed as described above, it is feared that the foreign matter, which has adhered to the vicinity of the injection port 5a of the urea addition valve 5, may be sucked from the injection port 5a into the urea addition valve 5. If the foreign matter is sucked into the urea addition valve 5, the interposition of the foreign matter or the clog-up by the foreign matter arises in some cases as shown in Fig. 2.

The foreign matter malfunction which arises in the urea addition valve 5 as described above, is sometimes caused during the operation of the internal combustion engine 1. If the suck back control is executed in a state in which the foreign matter malfunction arises in the urea addition valve 5 from the beginning, it is feared that the foreign matter malfunction may be deteriorated.

In view of the above, in this embodiment, the pre-suck back addition control (addition control before the suck back) is executed before executing the suck back control. In the pre-suck back addition control, the aqueous urea solution is added from the urea addition valve 5 in order to blow off the foreign matter existing in the urea addition valve 5 or in the vicinity of the injection port 5a of the urea addition valve 5.

When the pre-suck back addition control is executed as described above, it is possible to suppress the foreign matter existing in the vicinity of the injection port 5a of the urea addition valve 5 from being sucked into the urea addition valve 5 when the suck back control is executed. As a result, it is possible to suppress the occurrence of the foreign matter malfunction in the urea addition valve 5. Further, even when the foreign matter malfunction has been already caused in the urea addition valve 5, it is possible to suppress the deterioration of the foreign matter malfunction when the suck back control is executed, by executing the pre-suck back addition control.

In this embodiment, the pre-suck back addition control is firstly executed immediately after the stop of the operation of the internal combustion engine 1. Further, the suck back control is executed thereafter. In this procedure, the exhaust gas is not allowed to flow through the exhaust gas passage 3 when the pre-suck back addition control is executed. Therefore, the urea, which is added in accordance with the pre-suck back addition control, is not consumed as the reducing agent. However, the urea is adsorbed to SCR 4. The adsorbed urea is consumed as the reducing agent after the restart of the internal combustion engine 1.

In this embodiment, the injection period of the aqueous urea solution is shortened when the pre-suck back addition control is executed as compared with when the aqueous urea solution is added from the urea addition valve 5 in order to supply urea to SCR 4 during the ordinary operation of the internal combustion engine 1 (addition of the aqueous urea solution in this situation is hereinafter referred to as "ordinary addition" in some cases). When the injection period of the aqueous urea solution is shortened, the number of times of movement of the needle 5b in the urea addition valve 5 is increased. Accordingly, the foreign matter is exfoliated by the vibration brought about when the needle 5b is seated, and/or the foreign matter is ground or pulverized by the needle 5b. As a result, the foreign matter is blown off with ease. Further, the injection pressure of the aqueous urea solution is raised when the pre-suck back addition control is executed as compared with when the ordinary addition is performed. When the injection period and the injection pressure are controlled during the execution of the pre-suck back addition control as described above, the foreign matter can be blown off more effectively.

In this embodiment, the adsorption amount of urea in SCR 4 is estimated during the operation of the internal combustion engine 1. The adsorption amount of urea in SCR 4 can be estimated on the basis of the NOx exhaust amount from the internal combustion engine 1, the flow rate of the exhaust gas, the temperature of SCR 4, and the amount of addition of the aqueous urea solution from the urea addition valve 5 during the ordinary addition. The NOx exhaust amount from the internal combustion engine 1 is calculated on the basis of the operation state of the internal combustion engine 1. The flow rate of the exhaust gas is calculated on the basis of the detected value of the air flow meter 17. The temperature of SCR 4 is calculated on the basis of the detected values of the upstream side and downstream side temperature sensors 15, 16.

The amount of addition of the aqueous urea solution, which is provided when the pre-suck back addition control is executed, is set on the basis of the adsorption amount of urea in SCR 4 which is provided when the operation of the internal combustion engine 1 is stopped. In this procedure, the amount of addition of the aqueous urea solution, which is provided when the pre-suck back addition control is executed, is set so that the adsorption amount of urea in SCR 4 does not exceed the upper limit value of the adsorbable amount. Accordingly, when the pre-suck back addition control is executed, it is possible to suppress such a situation that the aqueous urea solution, which is added from the urea addition valve 5, is allowed to pass to the side disposed downstream from SCR 4 and the aqueous urea solution is released to the outside.

The adsorbable amount of urea in SCR 4 is changed depending on the temperature of SCR 4. That is, the lower the temperature of SCR 4 is, the larger the upper limit value of the adsorbable amount of urea in SCR 4 is. Accordingly, in this embodiment, the upper limit value of the adsorbable amount is calculated on the basis of the temperature of SCR 4 brought about when the operation of the internal combustion engine 1 is stopped.

### (Control flow)

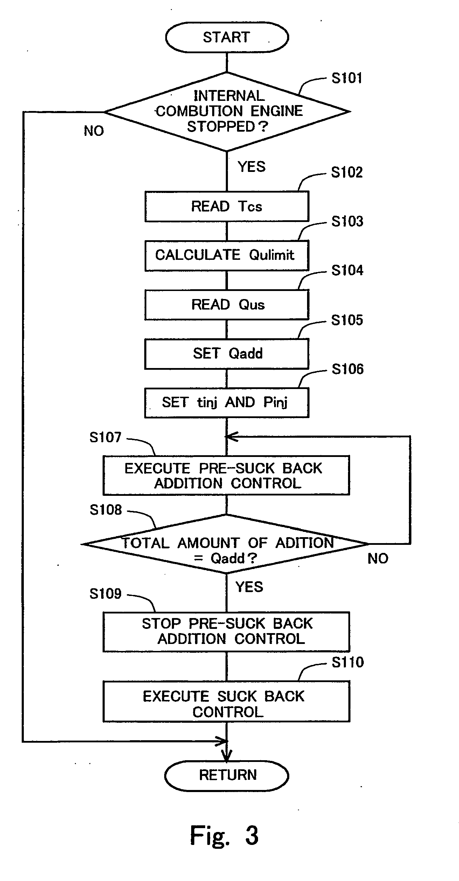

An explanation will be made below on the basis of a flow chart shown in Fig. 3 about a flow of the pre-suck back addition control and the suck back control according to this embodiment. This flow is previously stored in ECU 10, and the flow is repeatedly executed at predetermined intervals by ECU 10.

In this flow, at first, it is judged in Step S101 whether or not the operation of the internal combustion engine 1 is stopped. If the affirmative judgment is given in Step S101, the process of Step S102 is subsequently executed. If the negative judgment is given in Step S101, the execution of this flow is once completed.

In Step S102, the temperature Tcs of SCR 4, which is provided when the operation of the internal combustion engine 1 is stopped, is read.

Subsequently, in Step S103, the upper limit value Qulimit of the adsorbable amount of urea in SCR 4 is calculated on the basis of the temperature Tcs of SCR 4 read in Step S102. The relationship between the temperature of SCR 4 and the upper limit value Qulimit of the adsorbable amount of urea is previously determined, for example, on the basis of an experiment, and the relationship is stored as a map in ECU 20.

Subsequently, in Step S104, the urea adsorption amount Qus in SCR 4, which is provided when the operation of the internal combustion engine 1 is stopped, is read. In this embodiment, the urea adsorption amount in SCR 4 is estimated by ECU 10 at any time or on demand in accordance with the method as described above during the operation of the internal combustion engine 1. The estimated value is stored in ECU 10. In this embodiment, ECU 10, which estimates the urea adsorption amount in SCR 4, corresponds to the adsorption amount acquiring means according to the present invention.

Subsequently, in Step S105, the amount of addition Qadd of the aqueous urea solution, which is provided when the pre-suck back addition control is executed, is set on the basis of the urea adsorption amount Qus in SCR 4 read in Step S104. In this procedure, the amount of addition Qadd of the aqueous urea solution is set so that the urea adsorption amount in SCR 4 does not exceed the upper limit value Qulimit of the adsorbable amount calculated in Step S103, when the pre-suck back addition control is executed.

Subsequently, in Step S106, the injection period tinj and the injection pressure Pinj are set for the aqueous urea solution to be injected from the urea addition valve 5 when the pre-suck back addition control is executed. In this procedure, the injection period tinj and the injection pressure Pinj are set to preset values for the pre-suck back addition control as previously determined respectively. The preset value of the injection period tinj for the pre-suck back addition control is shorter than the preset value of the injection period for the ordinary addition. Further, the preset value of the injection pressure Pinj for the pre-suck back addition control is larger than the preset value of the injection pressure for the ordinary addition.

Subsequently, in Step S107, the pre-suck back addition control is executed. In this embodiment, ECU 10, which executes Step S107, corresponds to the pre-suck back addition control executing means according to the present invention.

Subsequently, in Step S108, it is judged whether or not the total amount of addition of the aqueous urea solution, which is provided from the start of the execution of the pre-suck back addition control, arrives at the amount of addition Qadd of the aqueous urea solution set in Step S105. If the affirmative judgment is given in Step S108, the execution of the pre-suck back addition control is subsequently stopped in Step S109. On the other hand, if the negative judgment is given in Step S108, the execution of the pre-suck back addition control is continued.

If the execution of the pre-suck back addition control is stopped in Step S109, the suck back control is subsequently executed in Step S110. In this embodiment, ECU 10, which executes Step S110, corresponds to the suck back control executing means according to the present invention.

In this embodiment, the pre-suck back addition control may be executed before the stop of the operation of the internal combustion engine 1. In this procedure, the urea, which is added in accordance with the pre-suck back addition control, can be consumed in the reduction of NOx in SCR 4 during the execution. However, in this procedure, if the period of time, which ranges until arrival at the stop of the operation of the internal combustion engine 1 after the stop of the execution of the pre-suck back addition control, is long, it is feared that the foreign matter contained in the exhaust gas may be newly adhered to the vicinity of the injection port 5a of the urea addition valve 5 during the period of time.

Therefore, in this procedure, the pre-suck back addition control is executed at a predetermined timing immediately before the stop of the operation of the internal combustion engine 1. In this procedure, the predetermined timing is determined so that the amount of the foreign matter contained in the exhaust gas newly adhered to the vicinity of the injection port 5a of the urea addition valve 5 is suppressed to be within an allowable range during the period until the stop of the operation of the internal combustion engine 1 after the stop of the execution of the pre-suck back addition control. The predetermined timing can be exemplified, for example, by the timing at which the shift lever enters the parking or the neutral and the timing at which the parking brake is applied in the vehicle which carries the internal combustion engine 1.

In this embodiment, the suck back control is executed every time when the operation of the internal combustion engine 1 is stopped. However, it is not necessarily indispensable that the pre-suck back addition control should be executed every time when the suck back control is executed. That is, the pre-suck back addition control may be executed once every time when the number of times of the stop of the operation of the internal combustion engine 1 arrives at a predetermined number of times. In this case, the predetermined number of times is the number of times of two or more times. The predetermined number of times is set, for example, on the basis of an experiment so that the deterioration of the foreign matter malfunction, which would be caused by the execution of the suck back control without executing the pre-suck back addition control, is suppressed to be within an allowable range.

When the number of times of the execution of the pre-suck back addition control is restricted as described above, it is possible to suppress the consumption of the aqueous urea solution.

### <Second Embodiment>

Next, a second embodiment of the present invention will be explained. Only the points or features, which are different from those of the first embodiment described above, will be explained herein.

### (Pre-suck back addition control)

Also in this embodiment, the pre-suck back addition control is executed before executing the suck back control after the stop of the operation of the internal combustion engine 1 in the same manner as in the first embodiment. However, in this embodiment, the pre-suck back addition control is executed only when the foreign matter malfunction has been already caused in the urea addition valve 5 at the point in time at which the operation of the internal combustion engine 1 is stopped. Accordingly, it is possible to suppress the consumption of the aqueous urea solution while suppressing the deterioration of the foreign matter malfunction in the urea addition valve 5 when the suck back control is executed.

### (Method for judging occurrence of foreign matter malfunction)

It is judged whether or not the foreign matter malfunction arises in the urea addition valve 5 during the operation of the internal combustion engine 1. For example, when the interposition of the foreign matter arises in the urea addition valve 5, the gap is formed between the needle 5b and the inner wall surface of the urea addition valve 5 even when the needle 5b is seated in the urea addition valve 5. As a result, it is impossible to completely shut off the injection port 5a, and the aqueous urea solution leaks out from the injection port 5a. In such a situation, the amount of urea supplied to SCR 4 is increased as compared with the desired amount.

On the other hand, when the foreign matter clog-up arises in the urea addition valve 5, the amount of the aqueous urea solution added into the exhaust gas from the urea addition valve 5 is decreased as compared with the amount to be added in the normal situation. As a result, the amount of urea supplied to SCR 4 is decreased as compared with the desired amount.

Therefore, the amount of urea actually supplied to SCR 4 is estimated, and the estimated value is compared with the urea supply amount to SCR 4 in the normal situation of the urea addition valve 5 (hereinafter referred to as "supply amount in the normal situation" in some cases). Accordingly, it is possible to judge whether or not the foreign matter malfunction arises in the urea addition valve 5. That is, if the difference between the estimated value of the urea supply amount to SCR 4 and the supply amount in the normal situation is larger than an allowable range, it is possible to judge that the foreign matter malfunction arises in the urea addition valve 5.

In this embodiment, the urea supply amount to SCR 4 is estimated on the basis of the difference between the detected value of the upstream side NOx sensor 13 and the detected value of the downstream side NOx sensor 14. The larger the urea supply amount to SCR 4 is, the more accelerated the reduction of NOx in SCR 4 is. As a result, the NOx concentration in the exhaust gas is lowered on the downstream side from SCR 4, and the difference between the detected value of the upstream side NOx sensor 13 and the detected value of the downstream side NOx sensor 14 is increased. Therefore, it is possible to estimate the urea supply amount to SCR 4 on the basis of the difference between the detected values.

In this embodiment, the relationship between the urea supply amount to SCR 4 and the difference between the detected value of the upstream side NOx sensor 13 and the detected value of the downstream side NOx sensor 14 is previously determined, for example, on the basis of an experiment. The relationship therebetween is stored as a map in ECU 10. The urea supply amount to SCR 4 is calculated by using the map.

The amount of urea consumed in the reduction of NOx in SCR 4 is also changed depending on the flow rate of the exhaust gas and the temperature of SCR 4. Therefore, the urea supply amount to SCR 4 is calculated taking these values into consideration as well.

In this embodiment, an ammonia sensor, which detects the ammonia concentration of the exhaust gas, may be provided in the exhaust gas passage 3 at a portion disposed on the downstream side from SCR 4. When the ammonia sensor is provided, it is also allowable to judge whether or not the foreign matter malfunction arises in the urea addition valve 5 on the basis of the detected value of the ammonia sensor when the aqueous urea solution is added from the urea addition valve 5.

### (Control flow)

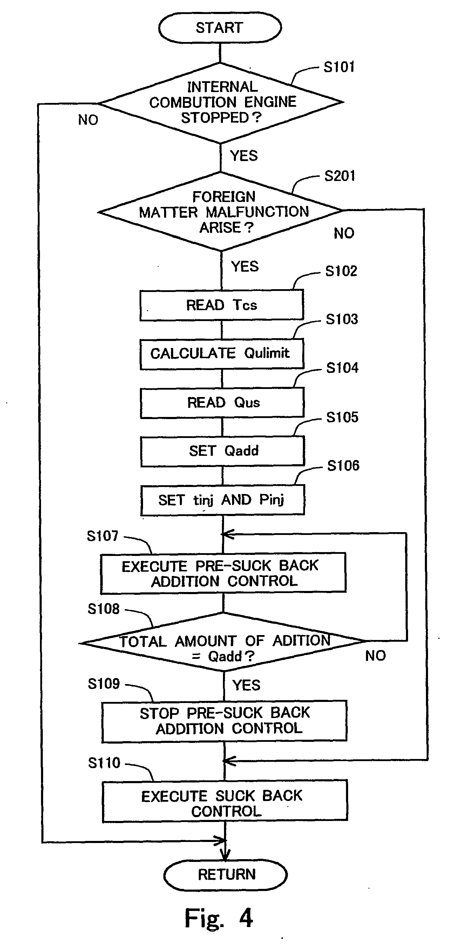

An explanation will be made below on the basis of a flow chart shown in Fig. 4 about a flow of the pre-suck back addition control and the suck back control according to this embodiment. This flow is previously stored in ECU 10, and the flow is repeatedly executed at predetermined intervals by ECU 10. The steps, in which the same processes as those of the respective steps of the flow shown in Fig. 3, are designated by the same reference numerals, any explanation of which will be omitted.

In this flow, if the negative judgment is given in S101, i.e., if it is judged that the operation of the internal combustion engine 1 is stopped, then the process of Step S201 is subsequently executed. In Step S201, it is judged whether or not the foreign matter malfunction arises in the urea addition valve 5 at the point in time at which the operation of the internal combustion engine 1 is stopped.

In this procedure, it is judged whether or not the foreign matter malfunction arises in the urea addition valve 5 by ECU 10 during the operation of the internal combustion engine 1 by means of the method described above. The judgment may be performed during the ordinary addition. The addition of the aqueous urea solution may be distinctly performed for the judgment. The judgment result, which is derived during the operation of the internal combustion engine 1, is stored in ECU 10.

Therefore, the affirmative judgment is given in Step S201 if the judgment result, which judges that the foreign matter malfunction arises in the urea addition valve 5 immediately before the stop of the operation of the internal combustion engine 1, is stored in ECU 10. On the other hand, the negative judgment is given in Step S201 if the judgment result, which judges that the foreign matter malfunction does not arise in the urea addition valve 5 immediately before the stop of the operation of the internal combustion engine 1, is stored in ECU 10. In this embodiment, ECU 10, which judges whether or not the foreign matter malfunction arises in the urea addition valve 5, corresponds to the judging means according to the present invention.

If the affirmative judgment is given in Step S201, the process of Step S102 is subsequently executed. On the other hand, if the negative judgment is given in Step S201, the process of Step S110 is subsequently executed.

According to the flow described above, if the foreign matter malfunction does not arise in the urea addition valve 5 at the point in time at which the operation of the internal combustion engine 1 is stopped, the suck back control is executed without executing the pre-suck back addition control.

Also in this embodiment, the pre-suck back addition control may be executed before the stop of the operation of the internal combustion engine 1. In this procedure, it is judged whether or not the foreign matter malfunction arises in the urea addition valve 5 at a predetermined timing previously determined as the timing of execution of the pre-suck back addition control. The predetermined timing is the same as or equivalent to the predetermined timing adopted when the pre-suck back addition control is performed before the stop of the operation of the internal combustion engine 1 in the first embodiment. If it is judged that the foreign matter malfunction does not arise in the urea addition valve 5, the operation of the internal combustion engine 1 is stopped without executing the pre-suck back addition control.

### <Third Embodiment>

Next, a third embodiment of the present invention will be explained. Only the points or features, which are different from those of the second embodiment described above, will be explained herein.

### (Pre-suck back addition control)

In this embodiment, the pre-suck back addition control is executed before the stop of the operation of the internal combustion engine 1. It is judged whether or not the foreign matter malfunction arises in the urea addition valve 5. The pre-suck back addition control is executed only when the foreign matter malfunction arises.

Further, in this embodiment, the amount of addition of the aqueous urea solution, which is provided when the pre-suck back addition control is executed, is previously set to a predetermined amount of addition. In this procedure, the predetermined amount of addition is a relatively small amount which has a constant value. Accordingly, the pre-suck back addition control is executed, and the predetermined amount of addition of the aqueous urea solution is added. After that, it is judged whether or not the foreign matter malfunction in the urea addition valve 5 is dissolved or eliminated. In this situation, if it is judged that the foreign matter malfunction is not dissolved, the pre-suck back addition control is executed again.

Whether or not the foreign matter malfunction in the urea addition valve 5 is dissolved can be judged by means of the method which is the same as or equivalent to that adopted when it is judged whether or not the foreign matter malfunction in the urea addition valve 5 arises before the execution of the pre-suck back addition control. That is, the aqueous urea solution is added from the urea addition valve 5, and the urea supply amount to SCR 4 is estimated on the basis of the difference between the detected value of the upstream side NOx sensor 13 and the detected value of the downstream side NOx sensor 14 provided in this situation. Further, the estimated value is compared with the supply amount which is provided in the normal situation. If the difference therebetween is within an allowable range, it can be judged that the foreign matter malfunction in the urea addition valve 5 is dissolved.

The amount of the aqueous urea solution, which is added from the urea addition valve 5 in order to judge whether or not the foreign matter malfunction in the urea addition valve 5 is dissolved, is previously determined. The supply amount in the normal situation is calculated on the basis of the previously determined amount of addition.

When an ammonia sensor is provided in the exhaust gas passage 3 at a portion disposed on the downstream side from SCR 4, it is also possible to judge whether or not the foreign matter malfunction in the urea addition valve 5 is dissolved, on the basis of the detected value of the ammonia sensor obtained when the aqueous urea solution is added from the urea addition valve 5.

When the amount of the foreign matter, which causes the foreign matter malfunction in the urea addition valve 5, is relatively small, even if the amount of the aqueous urea solution, which is added in accordance with the pre-suck back addition control, is relatively small, then it is possible to dissolve the foreign matter malfunction. However, when the amount of the foreign matter, which causes the foreign matter malfunction in the urea addition valve 5, is relatively large, it is necessary that a larger amount of the aqueous urea solution should be added in order to dissolve the foreign matter malfunction.

When the pre-suck back addition control is executed as described above, the amount of addition of the aqueous urea solution, which is added in order to dissolve the foreign matter malfunction, can be the amount corresponding to the amount of the foreign matter. Therefore, it is possible to dissolve the foreign matter malfunction in the urea addition valve 5 while suppressing any unnecessary addition of the aqueous urea solution.

### (Control flow)

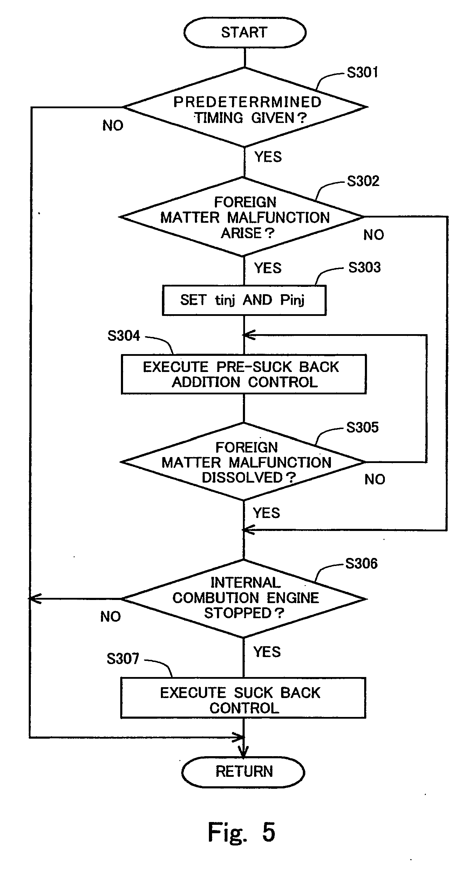

An explanation will be made below on the basis of a flow chart shown in Fig. 5 about a flow of the pre-suck back addition control and the suck back control according to this embodiment. This flow is previously stored in ECU 10, and the flow is repeatedly executed at predetermined intervals by ECU 10.

In this flow, at first, it is judged in Step S301 whether or not the predetermined timing before the stop of the operation of the internal combustion engine 1 is given, i.e., whether or not the timing, at which the pre-suck back addition control should be executed if the foreign matter malfunction arises in the urea addition valve 5, is given. In this procedure, the predetermined timing is the same as or equivalent to the predetermined timing which is given when the pre-suck back addition control is performed before the stop of the operation of the internal combustion engine 1 in the first or second embodiment. If the affirmative judgment is given in Step S301, the process of Step S302 is subsequently executed. If the negative judgment is given, the execution of this flow is once completed.

In Step S302, it is judged whether or not the foreign matter malfunction arises in the urea addition valve 5. The judging method, which is adopted herein, is the same as or equivalent to the judging method to judge whether or not the foreign matter malfunction arises in the second embodiment. If the affirmative judgment is given in Step S302, the process of Step S303 is subsequently executed. If the negative judgment is given, the process of S306 is executed.

In Step S303, the injection period tinj and the injection pressure Pinj of the aqueous urea solution to be injected from the urea addition valve 5 during the execution of the pre-suck back addition control are set. The process of Step S303 is the same as or equivalent to that of Step S106 in the flow shown in Fig. 3.

Subsequently, in Step S304, the pre-suck back addition control is executed. The pre-suck back addition control, which is executed in Step S304, is stopped when the amount of addition of the aqueous urea solution arrives at a predetermined amount of addition. In this embodiment, ECU 10, which executes Step S304, corresponds to the pre-suck back addition control executing means according to the present invention.

Subsequently, it is judged in Step S305 whether or not the foreign matter malfunction in the urea addition valve 5 is dissolved by means of the method as described above. If the affirmative judgment is given in Step S305, the process of Step S306 is subsequently executed. On the other hand, if the negative judgment is given in Step S305, the pre-suck back addition control is executed again.

In Step S306, it is judged whether or not the operation of the internal combustion engine 1 is stopped. If the affirmative judgment is given in Step S306, the suck back control is subsequently executed in Step S307. On the other hand, if the negative judgment is given in Step S306, the execution of this flow is once completed. In this embodiment, ECU 10, which executes Step S307, corresponds to the suck back control executing means according to the present invention.

According to the flow as described above, it is judged whether or not the foreign matter malfunction arises in the urea addition valve 5 before the stop of the operation of the internal combustion engine 1. If the foreign matter malfunction arises, the pre-suck back addition control is executed before the stop of the operation of the internal combustion engine 1. Further, if the foreign matter malfunction is not dissolved even when the pre-suck back addition control is executed, then the pre-suck back addition control is executed again. If the foreign matter malfunction does not arise in the urea addition valve 5, the suck back control is executed after the stop of the operation of the internal combustion engine 1 without executing the pre-suck back addition control.

Also in this embodiment, it is preferable that the pre-suck back addition control is executed so that the urea adsorption amount in SCR 4 does not exceed the upper limit value of the adsorbable amount. For example, when the pre-suck back addition control is executed again, the urea adsorption amount and the upper limit value of the adsorbable amount, which relate to SCR 4 at the present point in time, are calculated. Assuming that the aqueous urea solution, which is in a predetermined amount of addition, is added by executing the pre-suck back addition control again, it is judged whether or not the urea adsorption amount in SCR 4 exceeds the upper limit value of the adsorbable amount. If the affirmative judgment is given in this procedure, the pre-suck back addition control is prohibited from being executed again.

If it is judged that the urea adsorption amount in SCR 4 exceeds the upper limit value of the adsorbable amount when the pre-suck back addition control is executed, then it is also allowable that the pre-suck back addition control is executed while increasing the amount of NOx discharged or exhausted from the internal combustion engine 1. If the exhaust amount of NOx from the internal combustion engine 1 is increased, the amount of urea, which is consumed for the reduction of NOx in SCR 4, is increased. As a result, the urea adsorption amount in SCR 4 is decreased. Therefore, even when the pre-suck back addition control is executed, the urea adsorption amount in SCR 4 can be suppressed to be not more than the upper limit value of the adsorbable amount.

In this case, the method for increasing the exhaust amount of NOx from the internal combustion engine 1 may be exemplified, for example, by a method in which the fuel injection timing is retarded in the internal combustion engine 1, and a method in which the amount of EGR gas supplied to the internal combustion engine 1 by the EGR apparatus 9 is decreased.

### <Fourth Embodiment>

Next, a fourth embodiment of the present invention will be explained. Only the points or features, which are different from those of the first embodiment described above, will be explained herein.

### (Schematic arrangement)

In this embodiment, the part, which is indicated by reference numeral 4 in Fig. 1, is a storage reduction NOx catalyst (NOx storage reduction catalyst, hereinafter referred to as "NSR"). Further, the part, which is indicated by reference numeral 11 in Fig. 1, is a fuel supply apparatus for supplying, to NSR 4, a fuel (HC) to serve as the reducing agent. That is, with reference to Fig. 1, reference numeral 5 indicates a fuel addition valve, reference numeral 6 indicates a fuel tank, and reference numeral 8 indicates a fuel passage. The fuel, which is stored in the fuel tank 6, is fed under pressure via the fuel passage 8 to the fuel addition valve 5 by means of the electric pump 7.

The schematic arrangement of the fuel addition valve 5 according to this embodiment resides in the arrangement as shown in Fig. 2 in the same manner as the urea addition valve according to the first to third embodiments. That is, when the injection ports 5a are opened by moving the needle 5b in the axial direction of the fuel addition valve 5 in the fuel addition valve 5, the fuel is injected from the injection ports 5a.

Also in this embodiment, the fuel is injected periodically a plurality of times by repeating the opening and the shut off of the injection ports 5a when the fuel is added from the fuel addition valve 5. The injection pressure of the fuel injected from the fuel addition valve 5 can be changed by changing the pressurized feeding pressure of the fuel applied by the electric pump 7.

When the fuel is added from the fuel addition valve 5 into the exhaust gas, the fuel is supplied to NSR 4. When the fuel is supplied to NSR 4, then the temperature of NSR 4 is raised by the heat of oxidation of the fuel, the airfuel ratio is lowered in the surrounding atmosphere of NSR 4, and the surrounding atmosphere becomes a reducing atmosphere. As a result, NOx, which has been stored in NSR 4, is reduced.

In this embodiment, NSR 4 corresponds to the exhaust gas purification catalyst according to the present invention, and the fuel addition valve 5 corresponds to the addition valve according to the present invention. In this embodiment, the fuel supply apparatus 11 corresponds to the supply section according to the present invention.

### (Suck back control)

In this embodiment, if the fuel remains in the fuel addition valve 5 after the stop of the operation of the internal combustion engine 1, it is feared that the deterioration of the fuel addition valve 5, which results from the fuel, may be accelerated. Further, it is also feared that the remaining fuel may cause the addition failure during the ordinary addition after the restart of the internal combustion engine 1. Accordingly, also in this embodiment, the electric pump 7 is driven in the reverse direction after the stop of the operation of the internal combustion engine 1 in the same manner as in the first to third embodiments, and thus the suck back control is executed such that the fuel, which stays in the fuel addition valve 5, is sucked back to the fuel tank 6. It is possible to suppress the fuel from remaining in the fuel addition valve 5 by executing the suck back control.

### (Pre-suck back addition control)

Further, also in this embodiment, the pre-suck back addition control is executed in order to suppress the occurrence or the deterioration of the foreign matter malfunction in the fuel addition valve 5 when the suck back control is executed. In the pre-suck back addition control, the fuel is added from the fuel addition valve 5 in order to blow off the foreign matter existing in the fuel addition valve 5 or in the vicinity of the injection port 5a of the fuel addition valve 5.

In the case of this embodiment, when the pre-suck back addition control is executed after the stop of the operation of the internal combustion engine 1, the fuel, which is added in accordance with the pre-suck back addition control, tends to adhere to the exhaust gas passage 3 or NSR 4. Accordingly, in this embodiment, the pre-suck back addition control is executed at a predetermined timing before the stop of the operation of the internal combustion engine 1. The predetermined timing is the same as or equivalent to the predetermined timing provided when the pre-suck back addition control is performed before the stop of the operation of the internal combustion engine 1 in the first embodiment.

Accordingly, the fuel, which is added in accordance with the pre-suck back addition control, is consumed for the oxidation reaction or the reduction reaction in NSR 4. Therefore, it is possible to suppress the fuel from adhering to the exhaust gas passage 3 or NSR 4.

### (Control flow)

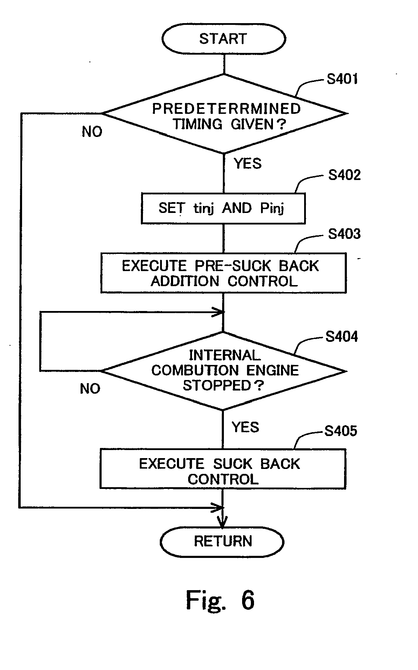

An explanation will be made below on the basis of a flow chart shown in Fig. 6 about a flow of the pre-suck back addition control and the suck back control according to this embodiment. This flow is previously stored in ECU 10, and the flow is repeatedly executed at predetermined intervals by ECU 10.

In this flow, at first, it is judged in Step S401 whether or not the predetermined timing is given before the stop of the operation of the internal combustion engine 1. If the affirmative judgment is given in Step S401, the process of Step S402 is subsequently executed. If the negative judgment is given in Step S401, the execution of this flow is once completed.

In Step S402, the injection period tinj and the injection pressure Pinj of the fuel to be injected from the fuel addition valve 5 during the execution of the pre-suck back addition control are set. The process of Step S402 is the same as or equivalent to that of Step S106 in the flow shown in Fig. 3. In the case of this embodiment, the "ordinary addition" refers to the addition of the fuel from the fuel addition valve 5 to be performed in order to supply the fuel to NSR 4 during the ordinary operation of the internal combustion engine 1.

Subsequently, in Step S403, the pre-suck back addition control is executed. In this embodiment, the amount of addition of the fuel, which is provided during the execution of the pre-suck back addition control, is previously set to a predetermined amount of addition. Therefore, the pre-suck back addition control, which is executed in Step S403, is stopped when the amount of addition of the fuel arrives at the predetermined amount of addition. In this embodiment, ECU 10, which executes Step S403, corresponds to the pre-suck back addition control executing means according to the present invention.

Subsequently, in Step S404, it is judged whether or not the operation of the internal combustion engine 1 is stopped. If the affirmative judgment is given in Step S404, the suck back control is subsequently executed in Step S405. On the other hand, if the negative judgment is given in Step S404, the process of Step S404 is executed again. In this embodiment, ECU 10, which executes Step S405, corresponds to the suck back control executing means according to the present invention.

In this embodiment, when the pre-suck back addition control is executed, then the fuel, which is added from the fuel addition valve 5, is oxidized in NSR 4, and the temperature of NSR 4 is raised thereby. Therefore, if the amount of the fuel, which is supplied to NSR 4 and which is oxidized in NSR 4, is excessively increased, it is feared that the temperature of NSR 4 may be excessively raised.

In view of the above, in this embodiment, the temperature of NSR 4 may be calculated on the basis of the detected values of the upstream side and downstream side temperature sensors 15, 16 during the execution of the pre-suck back addition control. Further, the pre-suck back addition control may be stopped when the temperature of NSR 4 arrives at a preset upper limit temperature.

Also in this embodiment, it is also allowable to judge whether or not the foreign matter malfunction arises in the fuel addition valve 5 before executing the pre-suck back addition control in the same manner as in the second or third embodiment. The pre-suck back addition control may be executed only when the foreign matter malfunction arises. In the case of this embodiment, it is possible to estimate the fuel supply amount to NSR 4 on the basis of the difference between the detected value of the upstream side temperature sensor 15 and the detected value of the downstream side temperature sensor 16 or the difference between the detected value of the upstream side NOx sensor 13 and the detected value of the downstream side NOx sensor 14 when the fuel is added from the fuel addition valve 5. It is possible to judge whether or not the foreign matter malfunction arises in the fuel addition valve 5 by comparing the estimated value with the fuel supply amount to NSR 4 in the normal situation.

Further, also in this embodiment, it is also allowable to judge whether or not the foreign matter malfunction is dissolved in the fuel addition valve 5 after executing the pre-suck back addition control in the same manner as in the third embodiment. If it is judged that the foreign matter malfunction is not dissolved in the fuel addition valve 5, the pre-suck back addition control may be executed again. In this procedure, the predetermined amount of addition of the fuel, which is provided during the execution of the pre-suck back addition control, is a relatively small constant amount. Whether or not the foreign matter malfunction is dissolved in the fuel addition valve 5 can be judged in accordance with the method which is the same as or equivalent to that adopted when it is judged whether or not the foreign matter malfunction arises in the fuel addition valve 5 before the execution of the pre-suck back addition control.

Also in this embodiment, the pre-suck back addition control may be executed after the stop of the operation of the internal combustion engine 1. In this procedure, it is preferable that the pre-suck back addition control is executed during a period in which NSR 4 is still in the active state immediately after the stop of the operation of the internal combustion engine 1. Accordingly, the added fuel is oxidized in NSR 4. Therefore, it is possible to suppress the fuel from adhering to NSR 4.

When NSR 4 according to this embodiment is replaced with any other catalyst such as an oxidation catalyst or the like or a filter which carries NSR, it is also possible to apply the suck back control and the pre-suck back addition control according to this embodiment.

### (Modified Embodiment)

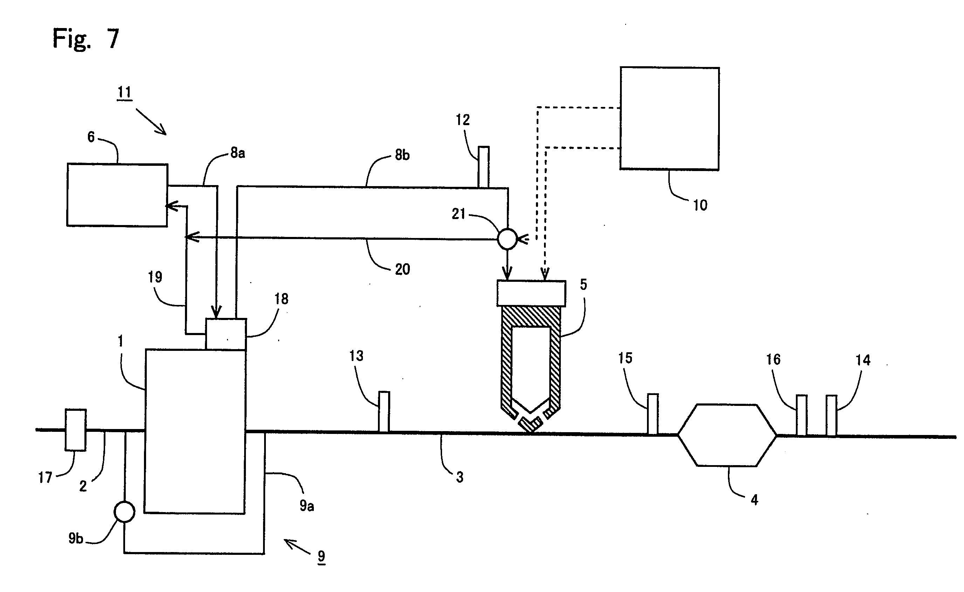

A modified embodiment of the embodiment of the present invention will be explained on the basis of Fig. 7. Only the points or features, which are different from those described above, will be explained herein.

Fig. 7 shows a schematic arrangement of an intake/exhaust system of an internal combustion engine 1 according to this modified embodiment. With reference to Fig. 7, reference numeral 8a indicates a first fuel passage which connects a fuel tank 6 and the internal combustion engine 1, and reference numeral 18 indicates a pump which feeds, under pressure, the fuel from the side of the fuel tank 6 to the side of the internal combustion engine 1. The pump 18 is a pump which is driven in accordance with the rotation of a crank shaft of the internal combustion engine 1. In Fig. 7, reference numeral 19 indicates a first return passage which connects the pump 18 and the internal combustion engine 1. In the first return passage 19, the fuel is allowed to flow from the side of the pump 18 to the side of the fuel tank 6 by means of the pressurized feeding force of the pump 18. That is, an amount of the fuel, which is unnecessary for the fuel injection in the internal combustion engine 1, is returned via the first return passage 19 from the pump 18 to the fuel tank 6.

The pump 18 and the fuel addition valve 5 are connected by a second fuel passage 8b. The fuel is fed under pressure by the pump 18, and thus the fuel is supplied from the fuel tank 6 to the fuel addition valve 5 via the first and second fuel passages 8a, 8b. Further, the second fuel passage 8b and the first return passage 19 are connected by a second return passage 20. A three-way valve 21 is provided at a connecting portion between the second fuel passage 8b and the second return passage 20. The three-way valve 21 is electrically connected to ECU 10, and the three-way valve 21 is controlled by ECU 10.

In the case of the arrangement of this modified embodiment, the suck back control can be executed by opening the route between the second return passage 20 and the second fuel passage 8b disposed on the downstream side from the three-way valve 21 (on the side of the fuel addition valve 5). That is, in the suck back control according to this modified embodiment, the fuel, which stays in the fuel addition valve 5, is sucked back to the fuel tank 6 via the second fuel passage 20 by driving the pump 18 in the forward direction. Even in the case of the arrangement as described above, the pre-suck back addition control can be performed in the same manner as described above.

The first to fourth embodiments described above can be combined with each other as far as possible. The first to third embodiments are illustrative of the case in which the addition valve provided for the exhaust gas passage is the urea addition valve, and the fourth embodiment is illustrative of the case in which the addition valve is the fuel addition valve. However, the present invention is also applicable when the addition valve adds the oxidizing agent (for example, ozone or hydrogen peroxide).

### [DESCRIPTION OF THE REFERENCE SIGNS]

- 1:: internal combustion engine
- 2:: intake passage
- 3:: exhaust gas passage
- 4:: NOx selective reduction catalyst (SCR), NOx storage reduction catalyst (NSR),
- 5:: urea addition valve, fuel addition valve
- 5a:: injection port
- 5b:: needle
- 6:: urea tank, fuel tank
- 7:: electric pump
- 8:: urea passage, fuel passage,
- 8a:: first fuel passage
- 8b:: second fuel passage
- 9:: EGR apparatus
- 10:: ECU
- 11:: urea supply apparatus, fuel supply apparatus
- 12:: pressure sensor
- 13, 14:: NOx sensor
- 15, 16:: temperature sensor
- 17:: air flow meter
- 18:: pump
- 19:: first return passage
- 20:: second return passage
- 21:: three-way valve

## Claims

1. An exhaust gas purification system for an internal combustion engine (1), said exhaust gas purification system comprising:
an exhaust gas purification catalyst (4) which is provided in an exhaust gas passage (3) of the internal combustion engine (1);
an addition valve (5) which is provided for the exhaust gas passage (3) at a portion disposed on an upstream side from the exhaust gas purification catalyst (4) and which adds, into an exhaust gas, an oxidizing agent or a reducing agent to be supplied to the exhaust gas purification catalyst (4);
a supply section (4) which supplies the oxidizing agent or the reducing agent to the addition valve (5); and
suck back control executing means (10) which executes suck back control such that the oxidizing agent or the reducing agent, which stays in the addition valve (5), is sucked back to the supply section (11) after stop of operation of the internal combustion engine (1);
**characterized by** further comprising:
pre-suck back addition control executing means (10) which executes pre-suck back addition control such that the oxidizing agent or the reducing agent is added from the addition valve (5) at a predetermined timing after the stop of the operation of the internal combustion engine and before executing the suck back control by the suck back control executing means (10).

2. The exhaust gas purification system for the internal combustion engine according to claim 1, further comprising:
judging means (10) which judges whether or not interposition of any foreign matter or clog-up of an injection port by any foreign matter arises in the addition valve, wherein:
the pre-suck back addition control is executed by the pre-suck back addition control executing means (10) if it is judged by the judging means (10) that the interposition of the foreign matter or the clog-up of the injection port by the foreign matter arises in the addition valve (5).

3. The exhaust gas purification system for the internal combustion engine according to claim 1 or 2 , wherein:
the oxidizing agent or the reducing agent is injected periodically a plurality of times when the oxidizing agent or the reducing agent is added into the exhaust gas from the addition valve (5); and
an injection period of the oxidizing agent or the reducing agent, which is provided when the pre-suck back addition control is executed by the pre-suck back addition control executing means (10), is shorter than that provided when the oxidizing agent or the reducing agent is added from the addition valve in order to supply the oxidizing agent or the reducing agent to the exhaust gas purification catalyst (4).

4. The exhaust gas purification system for the internal combustion engine according to any one of claims 1 to 3, wherein an injection pressure of the oxidizing agent or the reducing agent, which is provided when the pre-suck back addition control is executed by the pre-suck back addition control executing means (10), is higher than that provided when the oxidizing agent or the reducing agent is added from the addition valve (5) in order to supply the oxidizing agent or the reducing agent to the exhaust gas purification catalyst (4).

5. The exhaust gas purification system for the internal combustion engine according to any one of claims 1 to 4, wherein:
the exhaust gas purification catalyst (4) is an NOx selective reduction catalyst;
the addition valve (5) adds a compound originating from ammonia as the reducing agent;
the system further comprises adsorption amount acquiring means (10) which acquires an adsorption amount of the compound originating from ammonia in the NOx selective reduction catalyst; and
an amount of addition of the compound originating from ammonia, which is provided when the pre-suck back addition control is executed by the pre-suck back addition control executing means (10), is set on the basis of the adsorption amount of the compound originating from ammonia acquired by the adsorption amount acquiring means (10) so that the adsorption amount of the compound originating from ammonia in the NOx selective reduction catalyst does not exceed an upper limit value of an adsorbable amount.

6. The exhaust gas purification system for the internal combustion engine (1) according to claim 1, wherein:
the exhaust gas purification catalyst (4) is an NOx selective reduction catalyst; and
the addition valve (5) adds a compound originating from ammonia as the reducing agent.

7. The exhaust gas purification system for the internal combustion engine according to claim 1, wherein the supply section includes:
a storage tank (6) which stores the oxidizing agent or the reducing agent;
a supply passage (8) which connects the storage tank and the addition valve (5); and
a pump (7) which is provided for the supply passage (8) and which feeds, under pressure, the oxidizing agent or the reducing agent from a side of the storage tank (6) to a side of the addition valve (5); and
the suck back control is executed by reversely driving the pump (7) by the suck back control executing means (10).

8. The exhaust gas purification system for the internal combustion engine according to claim 1, wherein the supply section includes:
a storage tank (6) which stores the oxidizing agent or the reducing agent;
a supply passage (8a, 8b) which connects the storage tank (6) and the addition valve (5);
a pump (18) which is provided for the supply passage (8a, 8b) and which feeds, under pressure, the oxidizing agent or the reducing agent from a side of the storage tank (6) to a side of the addition valve (5);
a first return passage (19) which connects the pump (18) and the storage tank (6) and which allows the oxidizing agent or the reducing agent to flow from a side of the pump (18) to a side of the storage tank (6) by means of a pressurized feeding force of the pump (18);
a second return passage (20) which connects a portion of the supply passage (8a, 8b) disposed on a downstream side from the pump (18) and the pump (18) or the first return passage (19); and
a three-way valve (21) which is provided at a connecting portion between the supply passage (8a, 8b) and the second return passage (20); and
the suck back control executing means (10) executes the suck back control by opening a route between the second return passage (20) and a portion of the supply passage (8a, 8b) disposed on a downstream side from the three-way valve (21) by means of the three-way valve (21).

## Patentansprüche

1. Abgasreinigungssystem für eine Brennkraftmaschine (1), wobei das Abgasreinigungssystem einschließt:
einen Abgasreinigungskatalysator (4), der in einem Abgaskanal (3) der Brennkraftmaschine (1) vorgesehen ist;
ein Zugabeventil (5), das für den Abgaskanal (3) an einem Abschnitt vorgesehen ist, der an einer stromaufwärts liegenden Seite des Abgasreinigungskatalysators (4) angeordnet ist und das für ein Zuführen zu dem Abgasreinigungskatalysator (4) einem Abgas ein Oxidationsmittel oder ein Reduktionsmittel zuführt;
einen Zuführabschnitt (4), der das Oxidationsmittel oder das Reduktionsmittel dem Zugabeventil (5) zuführt; und
Mittel (10) zur Durchführung einer Rücksaugsteuerung, das eine Rücksaugsteuerung derart durchführt, dass das in dem Zugabeventil (5) verbleibende Oxidationsmittel oder Reduktionsmittel nach dem Anhalten des Betriebs der Brennkraftmaschine (1) in den Zuführabschnitt (11) zurückgesaugt wird;
**dadurch gekennzeichnet, dass** es ferner einschließt:
Mittel (10) zur Durchführung einer Zugabesteuerung vor einem Rücksaugen, das eine Zugabesteuerung vor einem Rücksaugen derart durchführt, dass das Oxidationsmittel oder das Reduktionsmittel von dem Zugabeventil (5) zu einer vorgegebenen Zeit nach dem Anhalten des Betriebs der Brennkraftmaschine und vor dem Durchführen der Rücksaugsteuerung durch das Mittel (10) zur Durchführung einer Rücksaugsteuerung zugegeben wird.

2. Abgasreinigungssystem für die Brennkraftmaschine nach Anspruch 1, welches ferner einschließt:
Beurteilungsmittel (10), das beurteilt, ob in dem Zugabeventil ein Dazwischenkommen irgendeines Fremdmaterials oder ein Verstopfen einer Einspritzöffnung durch irgendein Fremdmaterial auftritt, wobei:
die Zugabesteuerung vor einem Rücksaugen durch das Mittel (10) zur Durchführung einer Zugabesteuerung vor einem Rücksaugen durchgeführt wird, wenn durch das Beurteilungsmittel (10) beurteilt wird, dass in dem Zugabeventil (5) das Dazwischenkommen des Fremdmaterials oder das Verstopfen der Einspritzöffnung durch das Fremdmaterial auftritt.

3. Abgasreinigungssystem für die Brennkraftmaschine nach Anspruch 1 oder 2, wobei:
das Oxidationsmittel oder das Reduktionsmittel mehrmals periodisch eingespritzt wird wenn das Oxidationsmittel oder das Reduktionsmittel von dem Zugabeventil (5) in das Abgas zugegeben wird; und
ein Einspritzzeitraum des Oxidationsmittels oder des Reduktionsmittels, welcher bereitgestellt wird wenn die Zugabesteuerung vor einem Rücksaugen durch das Mittel (10) zur Durchführung einer Zugabesteuerung vor einem Rücksaugen durchgeführt wird, kürzer ist als derjenige, welcher bereitgestellt wird wenn das Oxidationsmittel oder das Reduktionsmittel von dem Zugabeventil zugegeben wird, um das Oxidationsmittel oder das Reduktionsmittel dem Abgasreinigungskatalysator (4) zuzuführen.

4. Abgasreinigungssystem für die Brennkraftmaschine nach einem der Ansprüche 1 bis 3, wobei ein Einspritzdruck des Oxidationsmittels oder des Reduktionsmittels, welcher bereitgestellt wird wenn die Zugabesteuerung vor einem Rücksaugen durch das Mittel (10) zur Durchführung einer Zugabesteuerung vor einem Rücksaugen durchgeführt wird, höher ist als derjenige, welcher bereitgestellt wird wenn das Oxidationsmittel oder das Reduktionsmittel von dem Zugabeventil (5) zugegeben wird, um das Oxidationsmittel oder das Reduktionsmittel dem Abgasreinigungskatalysator (4) zuzuführen.

5. Abgasreinigungssystem für die Brennkraftmaschine nach einem der Ansprüche 1 bis 4, wobei:
der Abgasreinigungskatalysator (4) ein NOx-selektiver Reduktionskatalysator ist;
das Zugabeventil (5) eine von Ammoniak abstammende Verbindung als das Reduktionsmittel zugibt;
das System ferner ein Adsorptionsmengenerfassungsmittel (10) einschließt, welches eine Adsorptionsmenge der von Ammoniak abstammenden Verbindung in dem NOx-selektiver Reduktionskatalysator erfasst; und
eine Zugabemenge der von Ammoniak abstammenden Verbindung, welche bereitgestellt wird wenn die Zugabesteuerung vor einem Rücksaugen durch das Mittel (10) zur Durchführung einer Zugabesteuerung vor einem Rücksaugen durchgeführt wird, auf Basis der von dem Adsorptionsmengenerfassungsmittel (10) erfassten Adsorptionsmenge der von Ammoniak abstammenden Verbindung so eingestellt wird, dass die Adsorptionsmenge der von Ammoniak abstammenden Verbindung in dem NOx-selektiven Reduktionskatalysator nicht einen oberen Grenzwert einer adsorbierbaren Menge übersteigt.

6. Abgasreinigungssystem für die Brennkraftmaschine (1) nach Anspruch 1, wobei:
der Abgasreinigungskatalysator (4) ein NOx-selektiver Reduktionskatalysator ist; und
das Zugabeventil (5) eine von Ammoniak abstammende Verbindung als das Reduktionsmittel zugibt.

7. Abgasreinigungssystem für die Brennkraftmaschine nach Anspruch 1, wobei der Zuführabschnitt einschließt:
einen Lagertank (6), der das Oxidationsmittel oder das Reduktionsmittel speichert;
eine Zuführleitung (8), die den Lagertank und das Zugabeventil (5) verbindet; und
eine Pumpe (7), die für die Zuführleitung (8) vorgesehen ist und das Oxidationsmittel oder das Reduktionsmittel unter Druck von einer Seite des Lagertanks (6) zu einer Seite des Zugabeventils (5) zuführt; und
die Rücksaugsteuerung durchgeführt wird, indem durch das Mittel (10) zur Durchführung einer Rücksaugsteuerung die Pumpe (7) in umgekehrter Richtung angetrieben wird.

8. Abgasreinigungssystem für die Brennkraftmaschine nach Anspruch 1, wobei der Zuführabschnitt einschließt:
einen Lagertank (6), der das Oxidationsmittel oder das Reduktionsmittel speichert;
eine Zuführleitung (8a, 8b), die den Lagertank (6) und das Zugabeventil (5) verbindet;
eine Pumpe (18), die für die Zuführleitung (8a, 8b) vorgesehen ist und das Oxidationsmittel oder das Reduktionsmittel unter Druck von einer Seite des Lagertanks (6) zu einer Seite des Zugabeventils (5) zuführt;
eine erste Rückführleitung (19), die die Pumpe (18) und den Lagertank (6) verbindet und mittels einer Zuführdruckkraft der Pumpe (18) es dem Oxidationsmittel oder dem Reduktionsmittel ermöglicht von einer Seite der Pumpe (18) zu einer Seite des Lagertanks (6) zu strömen;
eine zweite Rückführleitung (20), die einen Abschnitt der Zuführleitung (8a, 8b), der an einer stromabwärts liegenden Seite der Pumpe (18) angeordnet ist, und die Pumpe (18) oder die erste Rückführleitung (19) verbindet; und
ein Dreiwegeventil (21), das an einem Verbindungsabschnitt zwischen der Zuführleitung (8a, 8b) und der zweiten Rückführleitung (20) vorgesehen ist; und
das Mittel (10) zur Durchführung einer Rücksaugsteuerung die Rücksaugsteuerung durchführt, indem mittels des Dreiwegeventils (21) ein Weg zwischen der zweiten Rückführleitung (20) und einem Abschnitt der Zuführleitung (8a, 8b), der an einer stromabwärts liegenden Seite des Dreiwegeventils (21) angeordnet ist, geöffnet wird.

## Revendications

1. Système de purification de gaz d'échappement pour un moteur à combustion interne (1), ledit système de purification de gaz d'échappement comprenant :
un pot catalytique (4) de purification de gaz d'échappement qui est disposé dans un conduit de gaz d'échappement (3) du moteur à combustion interne (1) ;
une soupape d'ajout (5) qui est prévue pour le conduit de gaz d'échappement (3) au niveau d'une partie disposée du côté amont par rapport au pot catalytique (4) de purification de gaz d'échappement et qui ajoute, dans un gaz d'échappement, un agent oxydant ou un agent réducteur à délivrer au pot catalytique (4) de purification de gaz d'échappement ;
une section de délivrance (4) qui délivre l'agent oxydant ou l'agent réducteur à la soupape d'ajout (5) ; et
un moyen (10) d'exécution de commande de rétro-aspiration qui exécute une commande de rétro-aspiration de façon que l'agent oxydant ou l'agent réducteur, qui demeure dans la soupape d'ajout (5) soit rétro-aspiré vers la section de délivrance (11) après l'arrêt du fonctionnement du moteur à combustion interne (1),
**caractérisé en ce qu'**il comprend en outre :
un moyen (10) d'exécution de commande d'ajout avant rétro-aspiration qui exécute une commande d'ajout avant rétro-aspiration de façon que l'agent oxydant ou l'agent réducteur soit ajouté à partir de la soupape d'ajout (5) à un moment prédéterminé après l'arrêt du fonctionnement du moteur à combustion interne et avant l'exécution de la commande de rétro-aspiration par le moyen (10) d'exécution de commande de rétro-aspiration.

2. Système selon la revendication 1 de purification de gaz d'échappement pour moteur à combustion interne, comprenant en outre :
un moyen (10) d'estimation qui estime s'il s'est produit ou non dans la soupape d'ajout une interposition d'une quelconque matière étrangère ou le colmatage d'un orifice d'injection par une quelconque matière étrangère,
dans lequel la commande d'ajout avant rétro-aspiration est effectuée par le moyen (10) d'exécution de commande d'ajout avant rétro-aspiration s'il est estimé par le moyen (10) d'estimation qu'il s'est produit dans la soupape d'ajout (5) une interposition de matière étrangère ou un colmatage de l'orifice d'injection par la matière étrangère.

3. Système selon la revendication 1 ou 2 de purification de gaz d'échappement pour moteur à combustion interne,
dans lequel l'agent oxydant ou l'agent réducteur est injecté périodiquement plusieurs fois lorsque l'agent oxydant ou l'agent réducteur est ajouté dans le gaz d'échappement à partir de la soupape d'ajout (5), et
dans lequel la période d'injection de l'agent oxydant ou de l'agent réducteur, qui est prévue lorsque la commande d'ajout avant rétro-aspiration est effectuée par le moyen (10) d'exécution de commande d'ajout avant rétro-aspiration, est plus courte que celle prévue lorsque l'agent oxydant ou l'agent réducteur est ajouté à partir de la soupape d'ajout afin de délivrer l'agent oxydant ou l'agent réducteur au pot catalytique (4) de purification de gaz d'échappement.

4. Système selon l'une quelconque des revendications 1 à 3 de purification de gaz d'échappement pour moteur à combustion interne, dans lequel la pression d'injection de l'agent oxydant ou de l'agent réducteur, qui est prévue lorsque la commande d'ajout avant rétro-aspiration est effectuée par le moyen (10) d'exécution de commande d'ajout avant rétro-aspiration, est plus élevée que celle prévue lorsque l'agent oxydant ou l'agent réducteur est ajouté à partir de la soupape d'ajout (5) afin de délivrer l'agent oxydant ou l'agent réducteur au pot catalytique (4) de purification de gaz d'échappement.

5. Système selon l'une quelconque des revendications 1 à 4 de purification de gaz d'échappement pour moteur à combustion interne,
dans lequel le pot catalytique (4) de purification de gaz d'échappement est un pot catalytique de réduction sélective des oxydes d'azote (NOx),
dans lequel la soupape d'ajout (5) ajoute, comme agent réducteur, un composé obtenu à partir du gaz ammoniac,
dans lequel le système comprend en outre un moyen (10) d'acquisition de quantité adsorbée qui acquiert la quantité adsorbée du composé obtenu à partir du gaz ammoniac dans le pot catalytique de réduction sélective des NOx, et
dans lequel la quantité d'ajout du composé obtenu à partir du gaz ammoniac, qui est prévue lorsque la commande d'ajout avant rétro-aspiration est effectuée par le moyen (10) d'exécution de commande d'ajout avant rétro-aspiration, est fixée sur la base de la quantité adsorbée du composé obtenu à partir du gaz ammoniac acquise par le moyen (10) d'acquisition de quantité adsorbée de sorte que la quantité adsorbée du composé obtenu à partir du gaz ammoniac dans le pot catalytique de réduction sélective des NOx n'excède pas une valeur limite supérieure de quantité adsorbable.

6. Système selon la revendication 1 de purification de gaz d'échappement pour un moteur à combustion interne (1),
dans lequel le pot catalytique (4) de purification de gaz d'échappement est un pot catalytique de réduction sélective des NOx, et
dans lequel la soupape d'ajout (5) ajoute, comme agent réducteur, un composé obtenu à partir du gaz ammoniac.

7. Système selon la revendication 1 de purification de gaz d'échappement pour moteur à combustion interne, dans lequel la section de délivrance inclut :
un réservoir de stockage (6) qui stocke l'agent oxydant ou l'agent réducteur ;
un conduit de délivrance (8) qui relie le réservoir de stockage et la soupape d'ajout (5) ; et
une pompe (7) qui est prévue pour le conduit de délivrance (8) et qui fait circuler, sous pression, l'agent oxydant ou l'agent réducteur du côté du réservoir de stockage (6) au côté de la soupape d'ajout (5), et
dans lequel la commande de rétro-aspiration se fait en inversant l'entraînement de la pompe (7) à l'aide du moyen (10) d'exécution de commande de rétro-aspiration.

8. Système selon la revendication 1 de purification de gaz d'échappement pour moteur à combustion interne, dans lequel la section de délivrance inclut :
un réservoir de stockage (6) qui stocke l'agent oxydant ou l'agent réducteur ;
un conduit de délivrance (8a, 8b) qui relie le réservoir de stockage (6) et la soupape d'ajout (5) ;
une pompe (18) qui est prévue pour le conduit de délivrance (8a, 8b) et qui fait circuler, sous pression, l'agent oxydant ou l'agent réducteur du côté du réservoir de stockage (6) au côté de la soupape d'ajout (5) ;
un premier conduit de retour (19) qui relie la pompe (18) et le réservoir de stockage (6) et qui permet à l'agent oxydant ou l'agent réducteur de s'écouler depuis le côté de la pompe (18) vers le côté du réservoir de stockage (6) au moyen d'une force de circulation sous pression de la pompe (18) ;
un second conduit de retour (20) qui relie une partie du conduit de délivrance (8a, 8b) disposée du côté aval de la pompe (18) et la pompe (18) ou le premier conduit de retour (19) ; et
une vanne trois voies (21) qui est disposée au niveau d'une partie de liaison entre le conduit de délivrance (8a, 8b) et le second conduit de retour (20), et
dans lequel le moyen (10) d'exécution de commande de rétro-aspiration exécute la commande de rétro-aspiration en ouvrant, au moyen de la vanne trois voies (21), un passage entre le second conduit de retour (20) et une partie du conduit de délivrance (8a, 8b) disposée du côté aval par rapport à la vanne trois voies (21).
